# EUROPEAN PATENT APPLICATION

(11) **EP 4 064 237 A1**
(43) Date of publication of application: **28.09.2022**
(21) Application number: 20888823.0
(22) Date of filing: 20.11.2020
(51) Int. Cl.: G08B 13/184, H04Q 9/00, H01Q 19/10

(54) **RESIN CONTAINER AND MONITORING DEVICE**

(30) Priority: 22.11.2019 JP 2019211027
(71) Applicant: FURUKAWA ELECTRIC CO., LTD., Chiyoda-ku Tokyo 100-8322 (JP)
(72) Inventor: HAMADA, Hiroki, Tokyo 100-8322 (JP); MITSUHASHI, Yuito, Tokyo 100-8322 (JP); KAGIMOTO, Taishi, Tokyo 100-8322 (JP); HATTORI, Nobuhiko, Tokyo 100-8322 (JP); MOCHIZUKI, Takahiro, Tokyo 100-8322 (JP)
(74) Representative: Winter, Brandl - Partnerschaft mbB
(86) International application number: PCT/JP2020/043495
(87) International publication number: WO 2021/100870

(57) **Abstract**

The present invention provides a resin container and a monitoring device which are capable of suppressing damage such as the theft or destruction of content. Provided is a resin container 5 which contains a cable, the container being provided with: a container main body 52 which has an opening section 51 which opens upward; a lid 53 which closes the opening section 51; and a first reflection plate 54a which is configured from one or more reflection plates disposed at a prescribed position inside the lid 53, wherein, in the inside of the container main body 52, a wireless communication device 2 provided with a first communication unit 211 that communicates with a wireless communication apparatus is disposed, and, when a signal is transmitted from a second communication unit 212 of the wireless communication device 2 in a state where the lid 53 closes the opening section 51, the first reflection plate 54a is disposed at a position and an angle at which the signal is reflected and is received by the second communication unit 212.

## Description

### TECHNICAL FIELD

The present invention relates to a resin container that houses cables, and a monitoring device.

### BACKGROUND ART

Conventionally, techniques for installing wireless communication devices such as wireless base stations, radios, etc. in underground spaces are disclosed (for example, refer to PCT International Publication Nos. WO2015/156096 and WO2019/039598).
Patent Document 1: PCT International Publication No. 2015/156096
Patent Document 2: PCT International Publication No. 2019/039598

### DISCLOSURE OF THE INVENTION

### Problems to be Solved by the Invention

When wireless communication devices are installed in underground spaces, physical contact is more likely to occur to the wireless communication devices than when the wireless communication devices are installed above (spatially above) buildings and other structures. This increases the possibility of wireless communication devices being stolen, destroyed, or otherwise damaged.

It is, therefore, an object of the present invention to provide a resin container and a monitoring device capable of monitoring the state of a lid and reducing or preventing theft, destruction, or other damage to the contents based on the monitoring results.

### Means for Solving the Problems

A resin container according to an exemplary embodiment of the present application is directed to a resin container that accommodates a cable, and the resin container includes: a container body including an opening which is open upward; a lid that closes the opening; and at least one device that detects a change from an initial installation state of the resin container by an optical or electrical means.

Furthermore, the device includes a wireless communication device that transmits a detection result to outside, and the resin container further includes a monitoring device which is installed inside or outside of the resin container, and examines a change in a state of the resin container based on the detection result.

Furthermore, the device includes one or more first reflector(s) provided at a predetermined location inside of the lid.

Furthermore, the first reflector is provided in a position and at an angle such that, when a signal is transmitted from a second communication unit of the wireless communication device with the lid closing the opening, the first reflector reflects the signal, and the signal is received by the second communication unit.

Furthermore, the first reflector is provided in a position and at an angle such that, when signals are transmitted from the second communication unit in two or more different directions with the lid closing the opening, the first reflector reflects all signals transmitted from the second communication unit, and the all signals are received by the second communication unit.

Furthermore, the resin container includes one or more second reflector(s) provided at a predetermined location inside of the container body, and the first reflector and the second reflector are each provided in a position and at an angle such that, when a signal is transmitted from the second communication unit with the lid closing the opening, the first reflector and the second reflector each reflect the signal, and the signal is received by the second communication unit.

Furthermore, the first reflector and the second reflector are each provided in a position and at an angle such that, when signals are transmitted from the second communication unit in two or more different directions with the lid closing the opening, the first reflector and the second reflector reflect all signals transmitted from the second communication unit, and the all signals are received by the second communication unit.

A monitoring device according to an exemplary embodiment of the present invention is directed to a monitoring device that monitors a state of the lid of the resin container, and the monitoring device includes: a determinator that determines whether the state of the lid has changed beyond a certain level based on a signal received by the second communication unit; and an error signal generator that, when the determinator determines that the state of the lid has changed beyond a certain level, generates an error signal.

Furthermore, the determinator determines whether the state of the lid has changed beyond a certain level based on an electric field strength of the signal received by the second communication unit.

Furthermore, the monitoring device includes a memory unit that stores one or more pattern(s) indicating a change in the state of the lid, and the determinator compares a pattern of an electric field strength of the signal with a pattern stored in the memory unit to determine whether the state of the lid has changed beyond a certain level based on a comparison result.

Furthermore, the monitoring device includes a memory unit that stores one or more pattern(s) indicating a change in the state of the lid; and an identification unit that identifies the change in the state of the lid, in which the identification unit compares a pattern of an electric field strength of the signal with a pattern stored in the memory unit to determine whether the state of the lid has changed beyond a certain level based on a comparison result.

### Effects of the Invention

According to the exemplary embodiments of the present invention, it is possible to provide a resin container and a monitoring device capable of monitoring the state of the lid and reducing or preventing theft, destruction, or other damage to the contents based on the monitoring results.

### BRIEF DESCRIPTION OF THE DRAWINGS

FIG. 1 shows an overview of a monitoring system and a resin container according to the present invention.
FIGS. 2a and 2b show an overview of a wireless communication device and a resin container according to a first embodiment.
FIGS. 3a and 3b show an overview of a wireless communication device and a resin container according to a second embodiment.
FIGS. 4a, 4b and 4c show an overview of the wireless communication device and the resin container according to the second embodiment.
FIGS. 5a and 5b show an overview of a wireless communication device and a resin container according to a third embodiment.
FIGS. 6a and 6b show an overview of a wireless communication device and a resin container according to a fourth embodiment.
FIG. 7 is a block diagram showing functions of the monitoring system.
FIG. 8 is a table in which a plurality of patterns of signal field strengths and a plurality of changing states of the lid indicated by the patterns are associated with each other.
FIG. 9 is a flowchart showing a process flow of the monitoring system.

### PREFERRED MODE FOR CARRYING OUT THE INVENTION

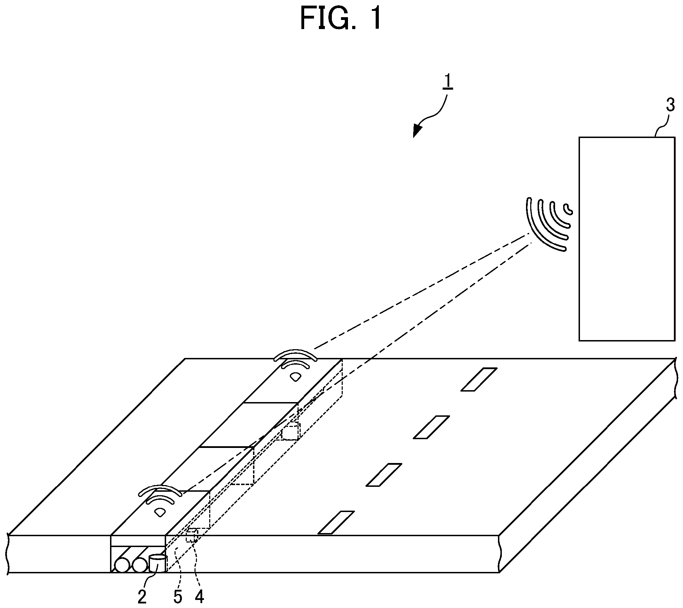

A description of the embodiments of the invention will be given in the following. FIG. 1 shows an overview of a monitoring system 1 according to the present invention. The monitoring system 1 is intended to detect theft, destruction, or other damage to a wireless communication device 2 located inside a resin container 5. As shown in FIG. 1, the monitoring system 1 includes the wireless communication device 2, a management device 3, and an error reporting device 4.

The wireless communication device 2 sends and receives communication radio waves for wirelessly communicating with wireless communication apparatuses. The wireless communication device 2 is, for example, a base station device for 5G (5th generation mobile communication system). However, the wireless communication device 2 is not limited to base station devices for 5G. The wireless communication apparatuses are, for example, mobile phones, smartphones, tablets, etc. The management device 3 is connected to the wireless communication device 2 by wired or wireless means. The management device 3 receives an error signal from the wireless communication device 2, and sends an error reporting signal to the error reporting device 4 to report the error. The error reporting device 4 receives the error reporting signal from the management device 3, and reports the error of wireless communication device 2.

### First Embodiment

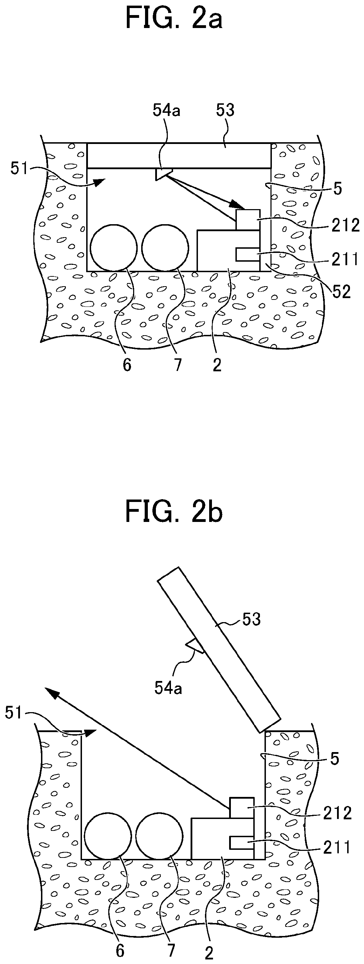

The following is a description of the first embodiment of the monitoring system 1 and the resin container 5 according to the present invention. FIGS. 2a and 2b show an overview of the wireless communication device 2 and the resin container 5 according to the first embodiment.

As shown in FIGS. 2a and 2b, the wireless communication device 2 functioning as a monitoring device is installed inside the resin container 5. The resin container 5 is described as one in which a portion of a lid 53 is exposed on the surface and a container body 52 is buried in the ground. However, the present invention is not limited thereto. The resin container 5 is a container for cables such as a communication line 6 and a power line 7. The power line 7 is connected to the wireless communication device 2 and supplies power to the wireless communication device 2. The resin container 5 has an opening 51, the container body 52, the lid 53, and a first reflector 54a.

The container body 52 is buried underground. The container body 52 has the opening 51 that opens upward. The lid 53 closes the opening 51 and seals the container body 52. The lid 53 is made of a material that transmits radio waves sent and received between the wireless communication device 2 and the wireless communication apparatus.

The first reflector 54a is provided at a predetermined location inside the lid 53 (the side facing the opening 51 when the container body 52 is sealed). The first reflector 54a reflects a signal transmitted from a second communication unit 212.

The wireless communication device 2 is provided inside the container body 52. The wireless communication device 2 has a mechanism for detecting changes from the initial installation state of the resin container 5. The wireless communication device 2 transmits the detection results to the outside. Furthermore, the wireless communication device 2 is installed inside or outside of the resin container 5. The wireless communication device 2 functions as a monitoring device that examines changes in the state of the resin container 5 based on the detection results. Furthermore, the first reflector 54a and the wireless communication device 2 each function as a mechanism for detecting changes from the initial installation state of the resin container 5 by an optical or electrical means. The wireless communication device 2 includes a first communication unit 211 and a second communication unit 212. The first communication unit 211 communicates with wireless communication apparatuses. The second communication unit 212 sends and receives signals to monitor the status of the lid 53.

The communication line 6 includes, for example, an optical fiber. The communication line 6 may include a coaxial cable. The wireless communication device 2 and a switching station (not shown) are connected by the communication line 6. The first communication unit 211 performs a prescribed communication with the switching station via the communication line 6. The wireless communication apparatus can communicate and talk with other wireless communication apparatuses by communicating with the first communication unit 211.

Furthermore, the management device 3 may be directly connected to the wireless communication device 2 by wire (the communication line 6) or wirelessly. Alternatively, the management device 3 may be connected to the wireless communication device 2 via the internet through a gateway (not shown) connected to a switching device. The wireless communication device 2 transmits the information obtained from the second communication unit 212 to the management device 3. As will be described in detail later, the management device 3 monitors (determines) the state of the lid 53 (whether the lid 53 is open or not) based on the result of the communication by the second communication unit 212. Alternatively, the management device 3 monitors (determines) the state of the lid 53 (whether the lid 53 is displaced or not) based on the result of the communication by the second communication unit 212.

Here, there are multiple possible configurations of where and how many reflectors are disposed. Some configuration examples are described below; however, the present invention is not limited to these configuration examples.

A case in which a single reflector is provided will be described. The first reflector 54a is provided, for example, in the position and at the angle shown in FIG. 2a. When a signal is transmitted from the second communication unit 212 of the wireless communication device 2 with the lid 53 closing the opening 51, the first reflector 54a reflects the signal. The signal is received by the second communication unit 212.

In such a configuration, as shown in FIG. 2b, when the lid 53 is not closing the opening 51, in other words, when the lid 53 is open and a signal is sent from the second communication unit 212, the first reflector 54a does not reflect the signal. In this case, the second communication unit 212 does not receive the signal.

Also, in a state where the lid 53 is not fully open, but the lid 53 is off or the lid 53 is flexed, and a signal is transmitted from the second communication unit 212, there is a possibility that the first reflector 54a reflects a part of or the entire signal. This reflected signal is considered to be reflected in a different direction from the reflected signal with the lid 53 fully closed. Then, depending on the angle of the reflected signal, the second communication unit 212 either does not receive the reflected signal or receives a reflected signal of weak strength (in electric field strength).

The second communication unit 212 transmits signals at a predetermined timing. The wireless communication device 2 transmits the information obtained by the second communication unit 212 to the management device 3. The information obtained by the second communication unit 212 includes, for example, information such as the presence or absence of a reflected signal, the strength of the reflected signal, and the time required to receive the reflected signal after transmitting the signal. The management device 3 monitors the status of the lid 53 based on the information obtained from the second communication unit 212.

In addition, a unique ID is assigned to the wireless communication device 2. The wireless communication device 2 sends this unique ID together with the information obtained by the second communication unit 212 to the management device 3. According to this configuration, the management device 3 can identify the location where the wireless communication device 2 is located based on the unique ID.

In the resin container 5, for example, when the lid 53 is opened or the lid 53 is deformed, the signal reflected by the first reflector 54a is not received by the second communication unit 212, or the strength of the received signal fluctuates. For example, when it is found that there is no reflected signal based on the information obtained by the second communication unit 212, then the management device 3 can determine that the lid 53 is not closing the opening 51. Furthermore, when the strength of the reflected signal is found to be weaker or stronger than normal based on the information obtained by the second communication unit 212, the management device 3 can determine that the lid 53 is displaced, or flexing inward. Furthermore, when it is found that the time required to receive the reflected signal is shorter or longer than usual based on the information obtained by the second communication unit 212, the management device 3 can determine that the lid 53 is displaced, etc.

In this way, the monitoring system 1 can monitor the state of the lid 53, and detect whether the lid 53 is in an erroneous state (e.g., the lid 53 is open) based on the signal reflected by the first reflector 54a.

Furthermore, the monitoring system 1 can also communicate, to the monitoring staff, information relating to the location where the wireless communication device 2 is located, as identified by the management device 3. This allows the staff to check the status of the lid 53 in which an error has been detected. Furthermore, the monitoring system 1 can also activate an alarm device located near the wireless communication device 2. Therefore, the monitoring system 1 can quickly determine the status of theft, destruction, or other damage to the wireless communication device 2 located in the resin container 5 covered by the lid 53 in which an error has been detected. Furthermore, the monitoring system 1 can also activate an alarm device located near the wireless communication device 2. This can prevent theft or destruction of the wireless communication device 2 located in the resin container 5 covered by the lid 53 for which an error has been detected.

### Second Embodiment

Next, a second embodiment of the invention will be described. In the description of the second embodiment, the same symbols are attached to the same configuration requirements as in the first embodiment, and descriptions thereof are omitted or simplified. A resin container 5 according to the second embodiment includes a first reflector 54b in addition to the first reflector 54a. This point differs mainly from the first embodiment. In terms of other configurations, the second embodiment has the same configuration as the wireless communication device and resin container of the first embodiment shown in FIG. 2.

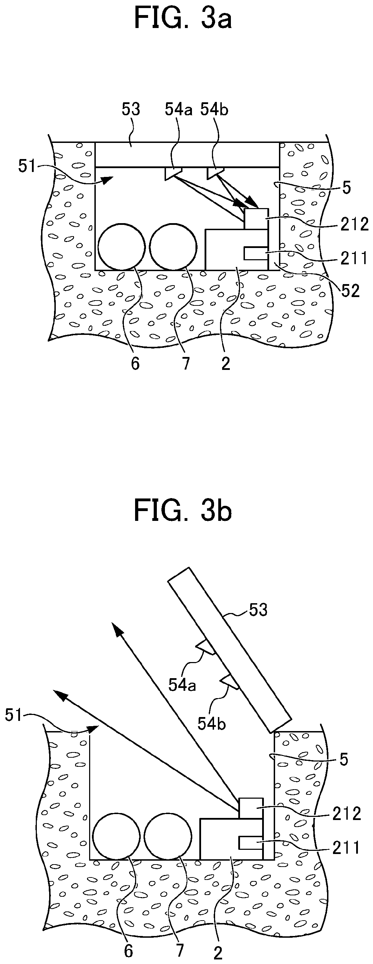

FIG. 3a and 3b show an overview of a wireless communication device and a resin container according to the second embodiment. As shown in FIGS. 3a and 3b, the resin container 5 includes first reflectors 54a and 54b. The first reflectors 54a and 54b include a plurality of reflectors. The plurality of reflectors are located at predetermined locations inside the lid 53.

The first reflectors 54a and 54b are, for example, provided in the positions and at the angles as shown in FIG. 3a. When signals are transmitted from the second communication unit 212 in two or more different directions with the lid 53 closing the opening 51, the first reflectors 54a and 54b reflect all signals transmitted from the second communication unit 212, and those signals are received by the second communication unit 212.

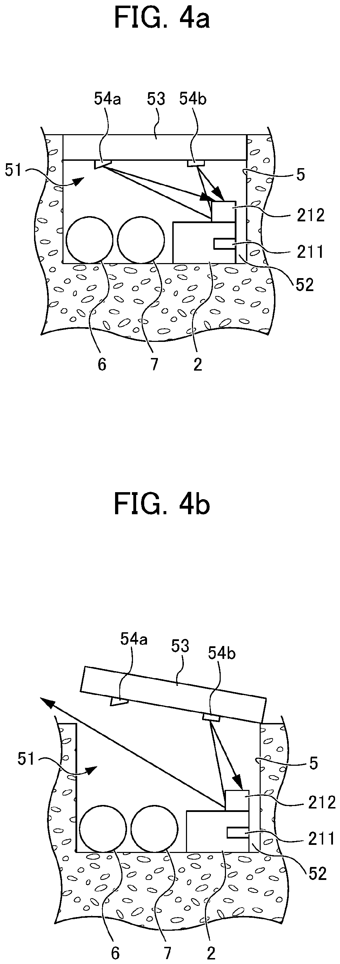

The case shown in FIG. 4a will be described. In the case shown in FIG. 4a, the first reflector 54a is disposed in the vicinity of one end of the lid 53. The first reflector 54b is disposed in the vicinity of the other end of the lid 53.

When the side in the vicinity of the one end of the lid 53 is open and the side in the vicinity of the other end is closed, and two signals are transmitted from the second communication unit 212 as shown in FIG. 4b, one signal is not reflected by the first reflector 54a, but the other signal is reflected by the first reflector 54b and is received by the second communication unit 212.

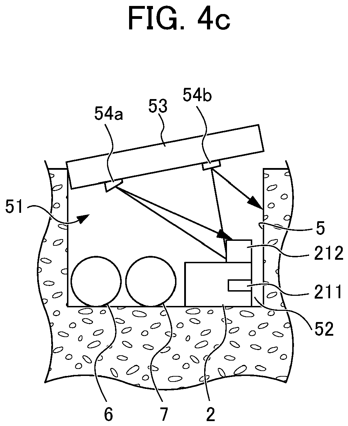

Furthermore, when the side in the vicinity of the other end of the lid 53 is open and the side in the vicinity of the one end is closed, and two signals are transmitted from the second communication unit 212 as shown in FIG. 4c, one signal is reflected by the first reflector 54a, and received by the communication unit 212, but the other signal is not reflected by the first reflector 54b.

In addition, when signals are sent from the second communication unit 212 while the lid 53 is wide open, as shown in FIG. 3b, those signals are not reflected by the first reflectors 54a and 54b, and not received by the second communication unit 212.

In this way, the monitoring system 1 can monitor the state of the lid 53 (whether the lid 53 is open wide, the side on which the lid 53 is open), and detect an error in the lid 53 based on the presence/absence or strength of the reflected signals from the respective first reflectors 54a and 54b which are provided at the different locations of the lid 53.

Furthermore, the monitoring system 1 can also communicate to the monitoring staff information on the location where the wireless communication device 2 is located, as identified by the management device 3. This allows the staff to check the status of the lid 53 in which an error has been detected. Furthermore, the monitoring system 1 can also activate an alarm device located near the wireless communication device 2. Therefore, the monitoring system 1 can quickly determine the status of theft, destruction, or other damage to the wireless communication device 2 located in the resin container 5 covered by the lid 53 in which an error has been detected. Furthermore, the monitoring system 1 can also activate an alarm device located near the wireless communication device 2. This can prevent theft or destruction of the wireless communication device 2 located in the resin container 5 covered by the lid 53 in which the error has been detected.

### Third Embodiment

Next, a third embodiment of the invention will be described. A resin container 5 according to the third embodiment includes a second reflector 54c in addition to the first reflector 54a. The third embodiment differs from the first embodiment in this respect. In other configurations, the third embodiment is identical to the first embodiment.

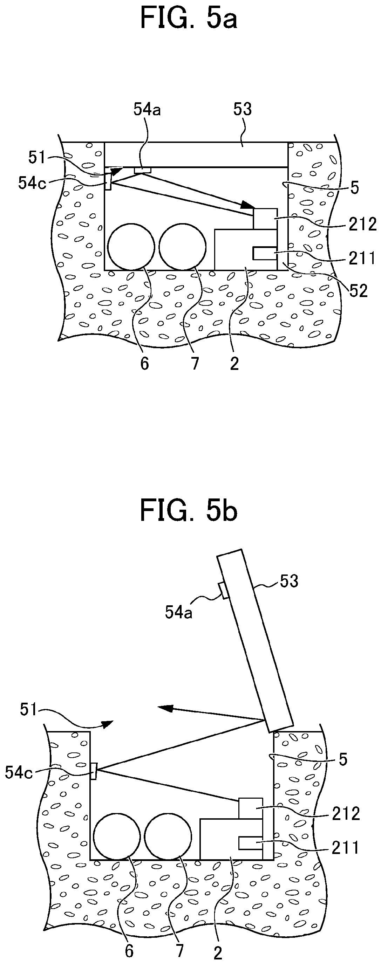

FIGS. 5a and 5b show an overview of a wireless communication device and a resin container according to the third embodiment. As shown in FIGS. 5a and 5b, the resin container 5 includes a first reflector 54a and a second reflector 54c. The first reflector 54a is disposed at a predetermined location inside of the lid 53. Furthermore, the second reflector 54c is disposed at a predetermined location inside of the container body 52.

The first reflector 54a and the second reflector 54c are, for example, provided in the positions and at the angles as shown in FIG. 5a. When a signal is transmitted from the second communication unit 212 with the lid 53 closing the opening 51, the first reflector 54a and the second reflector 54c reflect the signal, and the signal is received by the second communication unit 212.

In such a configuration, when the signal is transmitted from the second communication unit 212 with the lid 53 closing the opening 51, the transmitted signal is reflected by the second reflector 54c located on the container body 52, then reflected by the first reflector 54a located on the lid 53, and received by the second communication unit 212. It should be noted that the signal transmitted from the second communication unit 212 may be reflected by the first reflector 54a located on the lid 53, then reflected by the second reflector 54c located on the container body 52, and received by the second communication unit 212.

Furthermore, as shown in FIG. 5b, in a state in which the lid 53 is not closing the opening 51, in other words, in a state in which the lid 53 is open, when a signal is transmitted from the second communication unit 212, the signal is not reflected by the first reflector 54a, and not received by the second communication unit 212.

According to this configuration, since the presence/absence or the strength of the reception of the reflected signal by the second communication unit 212 varies, depending on whether the relative positional relationship between the second reflector 54c located on the container body 52 and the first reflector 54a located on the lid 53 meets certain conditions (whether the lid 53 is closing the opening 51), the monitoring system 1 of the third embodiment can monitor the state of the lid 53 with higher precision than the configuration of the resin container 5 according to the first embodiment.

The monitoring system 1 can monitor the state of lid 53 based on the first reflector 54a located on the lid 53 and the second reflector 54c located on the container body 52, and can detect an error in the lid 53 (the lid 53 is open, for example).

Furthermore, the monitoring system 1 can also communicate, to the monitoring staff, information on the location where the wireless communication device 2 is located, as identified by the management device 3. This allows them to check the status of the lid 53 in which an error has been detected. Furthermore, the monitoring system 1 can activate an alarm device located near the wireless communication device 2. Therefore, the monitoring system 1 can quickly determine the status of theft, destruction, or other damage to the wireless communication device 2 located in the resin container 5 covered by the lid 53 in which an error has been detected. Furthermore, the monitoring system 1 can also activate an alarm device located near the wireless communication device 2. This can prevent theft or destruction of the wireless communication device 2 located in the resin container 5 covered by the lid 53 in which the error has been detected.

### Fourth Embodiment

Next, a fourth embodiment of the invention will be described. A resin container 5 according to the fourth embodiment includes two first reflectors 54a and 54b and two second reflectors 54C and 54D. The fourth embodiment differs from the third embodiment in this respect. In the other configurations, the fourth embodiment is identical to the third embodiment.

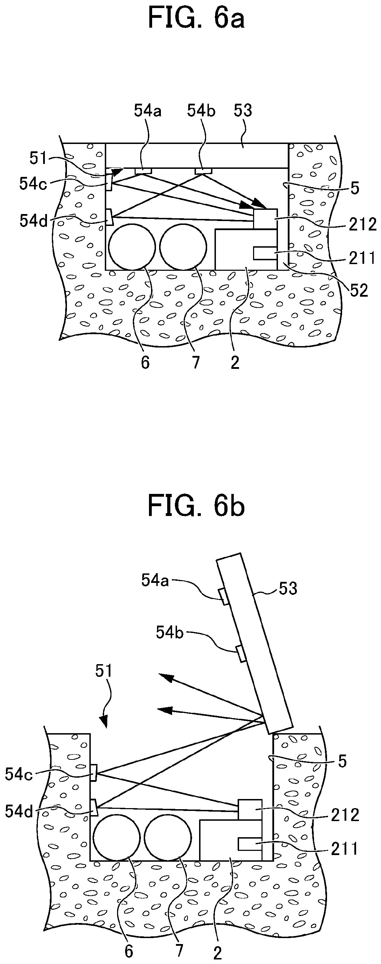

FIGS. 6a and 6b show an overview of a wireless communication device and a resin container according to the fourth embodiment. As shown in FIGS. 6a and 6b, the first reflectors 54a and 54b are each disposed at a predetermined location inside of the lid 53. Furthermore, the second reflectors 54c and 54d are each disposed at predetermined locations inside of the container body 52.

The first reflectors 54a and 54b, and the second reflector 54c and 54d are, for example, provided in the positions and at the angles as shown in FIG. 6a. When signals are transmitted from the second communication unit 212 in two or more different directions with the lid 53 closing the opening 51, the first reflectors 54a and 54b, and the second reflector 54c and 54d reflect all the signals transmitted from the second communication unit 212, and those signals are received by the second communication unit 212.

In such a configuration, when two signals are transmitted from the second communication unit 212 with the lid 53 closing the opening 51, one signal is reflected by the second reflector 54c provided on the container body 52, then reflected by the first reflector 54a provided on the lid 53, and received by the second communication unit 212. Furthermore, the other signal transmitted from the second communication unit 212 is reflected by the second reflector 54d located on the container body 52, then reflected by the first reflector 54b located on the lid 53, and received by the second communication unit 212.

It should be noted that the one signal transmitted from the second communication unit 212 may be reflected by the first reflector 54a located on the lid 53, then may be reflected by the second reflector 54c located on the container body 52, and may be received by the second communication unit 212. Furthermore, the other signal transmitted from the second communication unit 212 may be reflected by the first reflector 54b located on the lid 53, then may be reflected by the second reflector 54d located on the container body 52, and may be received by the second communication unit 212.

It should be noted that, when a signal is transmitted from the second communication unit 212 while the lid 53 is wide open, as shown in FIG. 6b, the signal is not reflected by the first reflectors 54a and 54b and not received by the second communication unit 212.

The resin container 5 according to the fourth embodiment is similar to the resin container 5 of the second embodiment, and the first reflector 54a may be located near one end of the lid 53, and the first reflector 54b may be located near the other end of the lid 53.

With such a configuration, the monitoring system 1 can monitor the state of the lid 53 (whether the lid 53 is wide open, the side on which the lid 53 is open, etc.) based on the presence/ absence or the strength of the reflected signals from the respective first reflectors 54a and 54b. This allows the monitoring system 1 to detect an error in the lid 53.

Furthermore, since the presence/absence or the strength of the reception of the reflected signal by the second communication unit 212 varies, depending on whether the relative positional relationship between the second reflectors 54c and 54d located on the container body 52 and the first reflectors 54a and 54b located on the lid 53 meets certain conditions (whether the lid 53 is closing the opening 51), the monitoring system 1 of the fourth embodiment can monitor the state of the lid 53 with higher precision than the configuration of the resin container 5 according to the first embodiment.

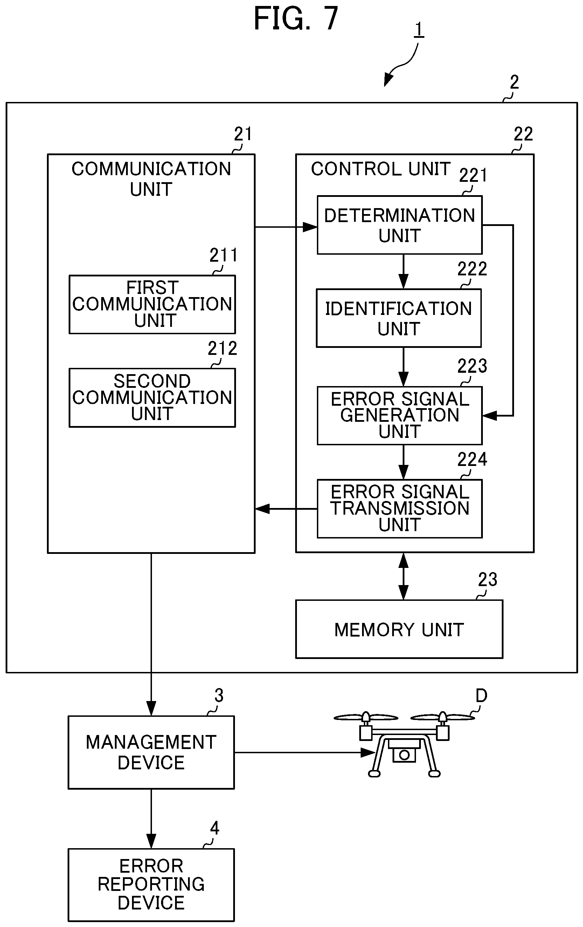

Furthermore, the monitoring system 1 can also communicate to the monitoring staff information on the location where the wireless communication device 2 is located, as identified by the management device 3. This allows the staff to check the status of the lid 53 in which an error has been detected. Furthermore, the monitoring system 1 can activate an alarm device located near the wireless communication device 2. Therefore, the monitoring system 1 can quickly determine the status of theft, destruction, or other damage to the wireless communication device 2 located in the resin container 5 covered by the lid 53 in which an error has been detected. Furthermore, the monitoring system 1 can also activate an alarm device located near the wireless communication device 2. This can prevent theft or destruction of the wireless communication device 2 located in the resin container 5 covered by the lid 53 in which the error has been detected. [0064]. FIG. 7 shows a block diagram showing functions of the monitoring system 1. As shown in FIG. 7, the monitoring system 1 includes the wireless communication device 2, the management device 3, and the error reporting device 4.

The wireless communication device 2 includes the communication unit 21, the control unit 22, and the memory unit 23. The communication unit 21 includes a transmitter and a receiver. This transmitter and receiver send and receive signals for wireless communication with external devices. Furthermore, the communication unit 21 of the wireless communication device 2 includes a first communication unit 211 and a second communication unit 212. The first communication unit 211 communicates with wireless communication apparatuses. The second communication unit 212 sends and receives signals to detect an error in the lid 53. It should be noted that, in the present embodiments, components for processing signals transmitted and received by the second communication unit 212 will be explained. In practice, however, the wireless communication device 2 also includes components (not shown) for processing signals transmitted and received by the first communication unit 211.

The control unit 22 is a CPU (Central Processing Unit). The CPU executes programs stored in memory unit 23 so as to function as a determination unit 221, an identification unit 222, an error signal generation unit 223 and an error signal transmission unit 224.

The determination unit 221 determines whether the state of the lid 53 has changed beyond a certain level based on the signal received by the second communication unit 212. More specifically, the memory unit 23 stores information (waveform, strength, etc.) of signals received when the lid 53 is closing the opening 51. The determination unit 221 analyzes the waveform of the signal received by the second communication unit 212. The determination unit 221 then compares the results of the analysis with the information stored in the memory unit 23. When there is a certain amount of difference between them, the determination unit 221 determines that the state of the lid 53 has changed by a certain amount.

In this way, it is possible for the wireless communication device 2 to determine whether or not the state of the lid 53 has changed beyond a certain level based on the signals received by the second communication unit 212 and the information stored in the memory unit 23.

For example, the determination unit 221 determines whether the state of the lid 53 has changed beyond a certain level based on the electric field strength of the signal received by the second communication unit 212. Here, the determination unit 221 uses Received Signal Strength Indicator (RSSI) for measuring the electric field strength to determine whether the state of the body 53 has changed beyond a certain level.

More specifically, a memory unit 23 stores the electric field strength of the signal received when the lid 53 is closing the opening 51. The determination unit 221 measures the electric field strength of the signal received by the second communication unit 212. The determination unit 221 then compares the measurement results with the electric field strengths stored in the memory unit 23. When there is a difference beyond a certain level between them, the determination unit 221 determines that the state of the lid 53 has changed beyond a certain level.

In this way, the wireless communication device 2 can determine whether the state of the lid 53 has changed beyond a certain level based on the electric field strength of the signal received by the second communication unit 212 and the electric field strength stored in the memory unit 23.

Furthermore, the determination unit 221 may compare the pattern of the electric field strength of the signal with the pattern stored in the memory unit 23 based on the comparison result, and determine whether the state of the lid 53 has changed beyond a certain level.

Here, the pattern of the electric field strength of the signal is expressed, for example, as a waveform pattern of the electric field strength of the signal within a fixed period of time. A fixed period of time is, for example, a few seconds, tens of seconds, or minutes. The determination unit 221, for example, uses pattern matching to determine whether the pattern of the electric field strength of the signal received by the second communication unit 212 within a fixed period of time matches the pattern stored in the memory unit 23.

It should be noted that the determination unit 221 uses the pattern of the electric field strength of the signal as described above. However, the present invention is not limited thereto. For example, when the electric field strength of the signal is greater than or less than a predetermined threshold value, the determination unit 221 may determine that the state of the lid 53 has changed by a certain amount. For example, when a signal is received by the second communication unit 212 in a case where the lid 53 is displaced and the distance between the second communication unit 212 and the reflector in the resin container 5 becomes far, the electric field strength of the signal is considered to be equal to or less than a predetermined threshold value. Furthermore, when a signal is received by the second communication unit 212 in a case where the lid 53 bends inward due to external force and the distance between the second communication unit 212 and the reflector in the resin container 5 becomes close, the electric field strength of the signal is considered to be greater than the predetermined threshold value.

In this way, the wireless communication device 2 can determine whether the state of the lid 53 has changed beyond a certain level based on the pattern of the field strength of the signal received by the second communication unit 212 and the pattern of the field strength of the signal received by the memory unit 23.

The identification unit 222 identifies the change in the state of the lid 53. More specifically, the identification unit 222 compares the pattern of the electric field strength of the signal with the pattern stored in the memory unit 23, and then identifies the change in the state of the lid 53 based on the result of said comparison.

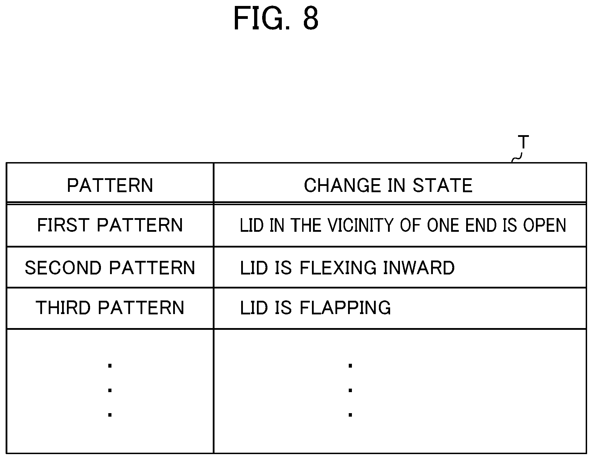

The memory unit 23 has a table T. In the table T, a plurality of patterns of the electric field strength of the signal are associated with a plurality of changes in the state of the lid 53 indicated by the patterns. For example, in the Table T, as shown in FIG. 8, the first pattern indicating the electric field strength of the signal is associated with the change in the state of the lid 53, which is "the side near the one end of the lid is open"; the second pattern indicating the electric field strength of the signal is associated with the change in the state of the lid 53, which is "the lid is flexing inward"; and third pattern indicating the electric field strength of the signal is associated with the change in the state of the lid 53, which is "the lid is flapping".

The identification unit 222 measures the pattern of the electric field strength of the signal received by the second communication unit 212. The identification unit 222 then refers to the table T stored in the memory unit 23. Thereafter, the identification unit 222 identifies the change in the state of the lid 53 corresponding to the pattern of the measured electric field strength.

In this way, the wireless communication device 2 can specifically identify the change in the state of the lid 53 based on the pattern of the electric field strength of the signal received by the second communication unit 212 and the table stored in the memory unit 23.

For example, in a case in which the resin container 5 adopts the configuration of the fourth embodiment described above, when the lid 53 is open (refer to FIG. 6b), the signal transmitted from the second communication unit 212 is not reflected by the first reflectors 54a and 54b and not received by the second communication unit 212. Therefore, in this case, the pattern of the electric field strength of the signal is unmeasurable. When the signal is transmitted from the second communication unit 212 but cannot be received by the second communication unit 212, the wireless communication device 2 identifies the change in the state of the lid 53 as the lid 53 being displaced.

Furthermore, when the lid 53 is flapping and continuously opening and closing, the electric field strength of the signal fluctuates between the lid 53 being open and closed. Therefore, the pattern of the electric field strength of the signal repeatedly becomes stronger and weaker.

When the determination unit 221 determines that the state of the lid 53 has changed beyond a certain level, the error signal generation unit 223 generates an error signal indicating an error in the lid 53. Furthermore, the error signal may include a signal indicating the change in the state of the lid 53 identified by the identification unit 222.

The error signal transmission unit 224 transmits an error signal generated by the error signal generation unit 223 to the management device 3. The error signal is transmitted by wireless communication or by wired communication through the communication line 6 provided in the resin container 5.

The memory unit 23 is, for example, a storage unit such as ROM (Read Only Memory) storing the Operating System (OS), application programs, etc., RAM (Random Access Memory), hard disk drives and SSD (Solid State Drives) for storing various pieces of information, and other storage devices. The memory unit 23 stores, for example, one or more of the patterns indicating the change in the state of the lid 53 described above.

The management device 3 is connected to the wireless communication device 2 by wireless communication or by wired communication via the communication line 6. When the management device 3 receives an error signal from the wireless communication device 2, the management device 3 generates a reporting signal to report the error in the lid 53 based on the error signal. The management device 3 then transmits the reporting signal to the error reporting device 4.

The error reporting device 4 receives the reporting signal from the management device 3 and reports the error in the lid 53 based on the reporting signal. There are various possible ways in which the error can be reported by the error reporting device 4. For example, an alarm device, which is the error reporting device 4 installed in the vicinity of the wireless communication device 2, may report by alarm. An alarm system, which is the error reporting device 4 installed around the wireless communication device 2, may also operate.

Furthermore, the management device 3 may also transmit the reporting signal to an unmanned flying vehicle D, such as a drone. In such a configuration, the unmanned flying vehicle D is directed by flight to the resin container 5 covered by the lid 53 in which an error has been detected. The unmanned flying vehicle D takes pictures of the area around the resin container 5 with its onboard camera. The administrator can monitor live images taken by the unmanned flying vehicle D to identify the error in the lid 53. In a case in which the wireless communication device 2 located in the resin container 5 is stolen or destroyed at this time, the police or other authorities can be reported.

Furthermore, the error reporting device 4 may also control monitoring cameras or other devices installed around the wireless communication device 2 to monitor the status of the wireless communication device 2.

It should be noted that the first communication unit 211 may not only communicate with wireless communication apparatuses, but also have a function of sending and receiving signals to monitor the state of the lid 53. In this configuration, the wireless communication device 2 does not need the second communication unit 212. Therefore, cost reduction can be achieved.

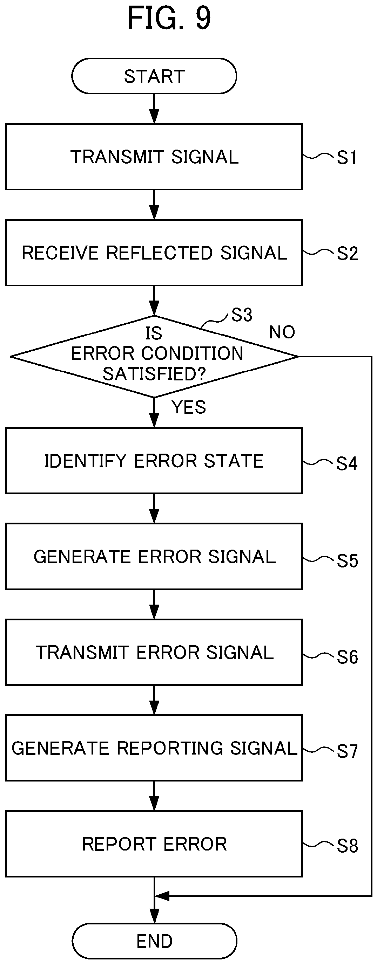

FIG. 9 is a flowchart showing the process flow of the monitoring system 1. In the following, a case in which the resin container 5 adopts the configuration of the fourth embodiment described above will be described as an example. In step S1, the second communication unit 212 transmits the signal. This signal is used to monitor the status of the resin container 5. In step S2, the second communication unit 212 receives the signal reflected by the first reflectors 54a and 54b, and the second reflectors 54c and 54d.

In step S3, the determination unit 221 determines whether the state of the lid 53 has changed beyond a certain level based on the signal received by the second communication unit 212. When the state of the lid 53 has changed (YES), the processing advances to step S4, and when the state of the lid 53 has not changed (NO), the processing ends.

In step S4, the identification unit 222 identifies the change in the state of the lid 53.

In step S5, the error signal generation unit 223 generates an error signal indicating an error in the lid 53. In step S6, the error signal transmission unit 224 transmits the error signal generated by the error signal generation unit 223 to the management device 3 via wireless communication or wired communication through the communication line 6.

In step S7, when the management device 3 receives the error signal, the management device 3 generates a reporting signal reporting the error in the lid 53 based on the received error signal, and transmits the generated reporting signal to the error reporting device 4. In step S8, the error reporting device 4 receives the reporting signal from the management device 3. The error reporting device 4 then reports the error of the wireless communication device 2 based on the reporting signal.

In this way, the monitoring system 1 can monitor the status of the lid 53 based on the signal reflected by the reflector provided on the lid 53. This allows the monitoring system 1 to detect whether there is an error in the lid 53 (for example, the lid 53 is open).

Furthermore, the monitoring system 1 can also communicate, to the monitoring staff, information on the location where the wireless communication device 2 is located, as identified by the management device 3. This allows the staff to check the status of the lid 53 in which an error has been detected. Furthermore, the monitoring system 1 can activate an alarm device located near the wireless communication device 2. Therefore, the monitoring system 1 can quickly determine the status of theft, destruction, or other damage to the wireless communication device 2 located in the resin container 5 covered by the lid 53 in which an error has been detected. Furthermore, the monitoring system 1 can also activate an alarm device located near the wireless communication device 2. This can prevent theft or destruction of the wireless communication device 2 located in the resin container 5 covered by the lid 53 in which the error has been detected.

Although embodiments of the invention have been described above, the invention is not limited to the aforementioned embodiments. The advantageous effects described in the embodiments are only a list of the most suitable effects arising from the invention, and thus are not limited to those described in the embodiments.

### EXPLANATION OF REFERENCE NUMERALS

1 monitoring system
2 wireless communication device
3 management device
4 error reporting device
5 resin container
51 opening
52 container body
53 lid
54a, 54b first reflector
54c, 54d second reflector
6 communication line
7 power line
21 communication unit
22 control unit
23 memory unit
101 communication unit
102 control unit
103 memory unit
211 first communication unit
212 second communication unit
221 determination unit
222 identification unit
223 error signal generation unit
224 error signal transmission unit

## Claims

1. A resin container that accommodates a cable, comprising:
a container body including an opening which is open upward;
a lid that closes the opening; and
at least one device that detects a change from an initial installation state of the resin container by an optical or electrical means.

2. The resin container according to claim 1,
wherein the device includes a wireless communication device that transmits a detection result to outside, and
the resin container further includes a monitoring device which is installed inside or outside of the resin container, and examines a change in a state of the resin container based on the detection result.

3. The resin container according to claim 2, wherein the device includes one or more first reflector(s) provided at a predetermined location inside of the lid.

4. The resin container according to claim 3, wherein
the wireless communication device including a first communication unit that communicates with a wireless communication apparatus is provided inside of the container body, and
the first reflector is provided in a position and at an angle such that, when a signal is transmitted from a second communication unit of the wireless communication device with the lid closing the opening, the first reflector reflects the signal, and the signal is received by the second communication unit.

5. The resin container according to claim 4, wherein the first reflector is provided in a position and at an angle such that, when signals are transmitted from the second communication unit in two or more different directions with the lid closing the opening, the first reflector reflects all signals transmitted from the second communication unit, and the all signals are received by the second communication unit.

6. The resin container according to claim 4, further comprising one or more second reflector(s) provided at a predetermined location inside of the container body,
wherein the first reflector and the second reflector are each provided in a position and at an angle such that, when a signal is transmitted from the second communication unit with the lid closing the opening, the first reflector and the second reflector each reflect the signal, and the signal is received by the second communication unit.

7. The resin container according to claim 6, wherein the first reflector and the second reflector are each provided in a position and at an angle such that, when signals are transmitted from the second communication unit in two or more different directions with the lid closing the opening, the first reflector and the second reflector reflect all signals transmitted from the second communication unit, and the all signals are received by the second communication unit.

8. A monitoring device that monitors a state of the lid of the resin container according to any one of claims 4 to 7, the monitoring device comprising:
a determinator that determines whether the state of the lid has changed beyond a certain level based on a signal received by the second communication unit; and
an error signal generator that, when the determinator determines that the state of the lid has changed beyond a certain level, generates an error signal.

9. The monitoring device according to claim 8, wherein the determinator determines whether the state of the lid has changed beyond a certain level based on an electric field strength of the signal received by the second communication unit.

10. The monitoring device according to claim 9, further comprising a memory unit that stores one or more patterns indicating a change in the state of the lid,
wherein the determinator compares a pattern of an electric field strength of the signal with a pattern stored in the memory unit to determine whether the state of the lid has changed beyond a certain level based on a comparison result.

11. The monitoring device according to claim 9, further comprising:
a memory unit that stores one or more pattern(s) indicating a change in the state of the lid; and
an identification unit that identifies the change in the state of the lid,
wherein the identification unit compares a pattern of an electric field strength of the signal with a pattern stored in the memory unit to determine whether the state of the lid has changed beyond a certain level based on a comparison result.
